# EUROPEAN PATENT SPECIFICATION

(11) **EP 2 302 996 B1**
(45) Date of publication and mention of the grant of the patent: **27.03.2013**
(21) Application number: 09802594.3
(22) Date of filing: 16.07.2009
(51) Int. Cl.: A01G 13/02, A01G 17/02

(54) **APPARATUS FOR MULCHING A CROP**
VORRICHTUNG ZUM MULCHEN EINER PFLANZENZUCHT
APPAREIL DE PAILLAGE D'UNE CULTURE

(30) Priority: 28.07.2008 IT BO20080466
(43) Date of publication of application: 06.04.2011
(73) Proprietor: Nobili S.p.A., 40062 Molinella (Bologna) (IT)
(72) Inventor: ROSSI, Mario, I-40062 Molinella (Bologna) (IT)
(74) Representative: Fanzini, Valeriano
(86) International application number: PCT/IB2009/053094
(87) International publication number: WO 2010/013165

(56) References cited:
- WO-A-96/41515
- DE-U1- 8 337 174
- US-A1- 2004 006 960
- US-B1- 6 644 003

## Description

### Technical Field

This invention relates to mulching of agricultural crops and, more specifically, concerns an apparatus for mulching crops using organic material from the soil contiguous with the crop and, in particular, from the soil between two adjacent crop rows.

### Background Art

Mulching, as it is known, consists of covering the crop soil totally or partially with a mass of opaque material in order to limit weed growth.

Mulching can be carried out using plant materials, such as leaves, straw, sawdust, shredded prunings and chopped bark, or coloured plastic materials such as high- and low-density polyethylene, polyvinyl chloride, polypropylene fabric, etc.

Organic mulch is particularly advantageous because it reduces the local temperature of the soil compared to the surrounding areas that are not mulched, helps retain moisture, promoting the growth of microflora as a result of the improved moisture and temperature conditions. Generally speaking, therefore, mulched soils are richer in nutritive elements than soils that have not been treated with mulch.

Over recent years, cover crops have helped to greatly improve soil management for tree crops (particularly grapes) and strip tillage has become well-established as an alternative to full-width, traditional tillage of the soil.

In practice, the soil between two adjacent crop rows, that is to say the inter-row soil sulfate, is left with a cover of grass or of specific cover crops (field beans, for example) while the soil in the crop rows themselves is weeded and/or treated specifically for the main crop.

This type of soil management system, although highly appreciated for the positive results that it can provide, has the disadvantage of requiring row soil on the one hand and inter-row soil on the other to be managed completely independently of each other.

US2004/006960 discloses a mower unit attachable to a vehicle body that includes a mower deck defining a grass discharge opening at an opposite side of one side wall, and has a plurality of rotary blades juxtaposed inside the mower deck to be rotatable about vertical axes, all being rotatable in the same direction so that a front half, with respect to a travelling direction, of a track of rotation of each rotary blade points toward the side having the grass discharge opening.

### Disclosure of the Invention

This invention therefore has for an aim to overcome the above mentioned disadvantage through coordinated, interdependent and hence synergic management of the crop soil and of the soil contiguous with it.

In accordance with this aim, it is provided a mulching apparatus in accordance with claim 1.

### Brief Description of the Drawings

The technical features of the invention in accordance with the above aims are clearly described in the appended claims and its advantages are more apparent from the detailed description which follows, with reference to the accompanying drawings which illustrate preferred, non-limiting example embodiments of the invention, and in which:
- Figure 1 is an overall view of an agricultural operator assembly using the apparatus according to the invention for mulching the rows of a tree crop while simultaneously managing the soil contiguous with two adjacent crop rows;
- Figures 2 and 3 are, respectively, rear side and front side perspective views of an agricultural machine equipped with the mulching apparatus according to the invention;
- Figures 4 and 5 are detail views of some parts of the apparatus of Figures 1 and 2;
- Figure 6 is an overall perspective view, with some parts cut away in order to better illustrate others, of a first embodiment of the apparatus;
- Figure 7 is an overall perspective view, with some parts cut away in order to better illustrate others, of a second embodiment of the apparatus;
- Figures 8 and 9 are schematic perspective views of a first and a second example, respectively, of an agricultural machine integrating the apparatus according to the invention.

### Description of the Preferred Embodiments of the Invention

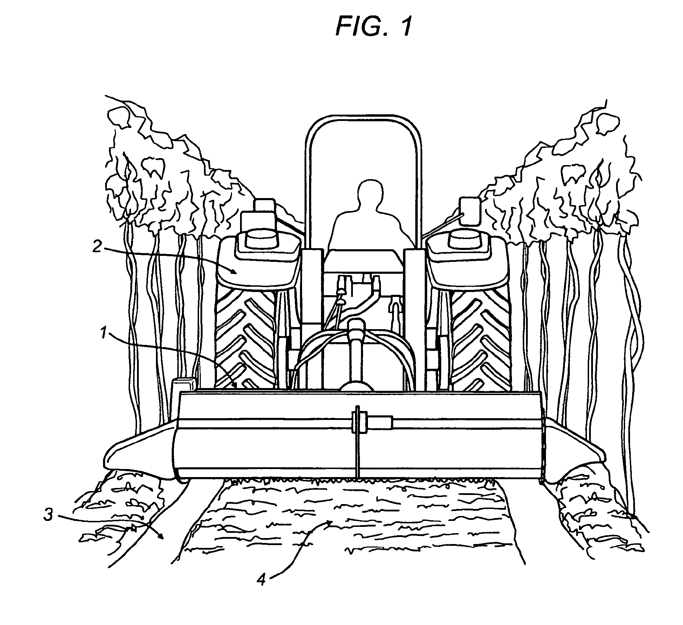

With reference to the accompanying drawings, the numeral 1 in Figure 1 denotes in its entirety an apparatus, or an agricultural operating machine - in particular drawn by a tractor 2 - that is adapted to mulch the soil 3 of a crop using material collected from the soil 4 contiguous with the crop soil.

The crop soil 3 might be - for example - the soil in a row of tree crops. The contiguous soil 4, on the other hand, might be the soil between two adjacent crop rows; this soil might be covered with grass or cultivated with a cover crop in order to produce an organic material suitable for use as mulch, or the soil 4 might simply have on it waste material left over from earlier agricultural operations, for example, leaves, straw, mowings or prunings.

The machine 1 advantageously comprises means 5 for collecting from the soil 4 the material of preferably organic origin, and means 9 for transferring the material to the soil 3 pertaining to the crop to be mulched.

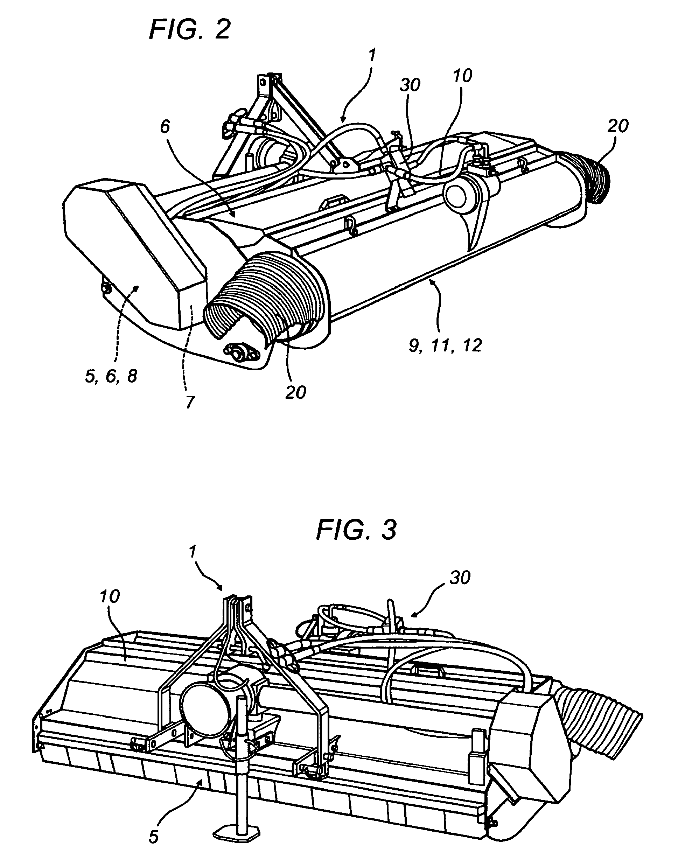

The collecting means may conveniently be embodied by a conventional shredder which is well known to experts in the trade and does not therefore necessitate detailed description. The term is, however, used in a broad and non-limiting sense to denote a wide range of agricultural operating machines or apparatuses (one of which is shown by way of an example in Figures 2 and 3) having in common the presence of a power-driven rotor 6 (in this specific case, with a horizontal axis 7, hidden in a protective casing 10), the rotor 6 bearing respective means for cutting grass, bushes, shrubs, etc. - or simply to collect organic material of any kind present on the inter-row strip of soil 4 - and to reduce it in small pieces which are then conveyed towards an outlet section or opening 8 through which they are passed on to the means 9 that transfer the organic material.

The means 9 for transferring the organic material are in particular embodied by apparatus 11 that is structurally connected to the shredder casing 10.

The apparatus 11 comprises an endless conveyor 12, which feeds the material continuously, which is mounted on the casing 10, downstream of the outlet section or opening 8 of the collecting means 5, and which is designed to receive the waste material from the collecting means 5, to contribute to moving it away from the inter-row strip of soil 4 and at the same time to transfer it to the crop soil 3.

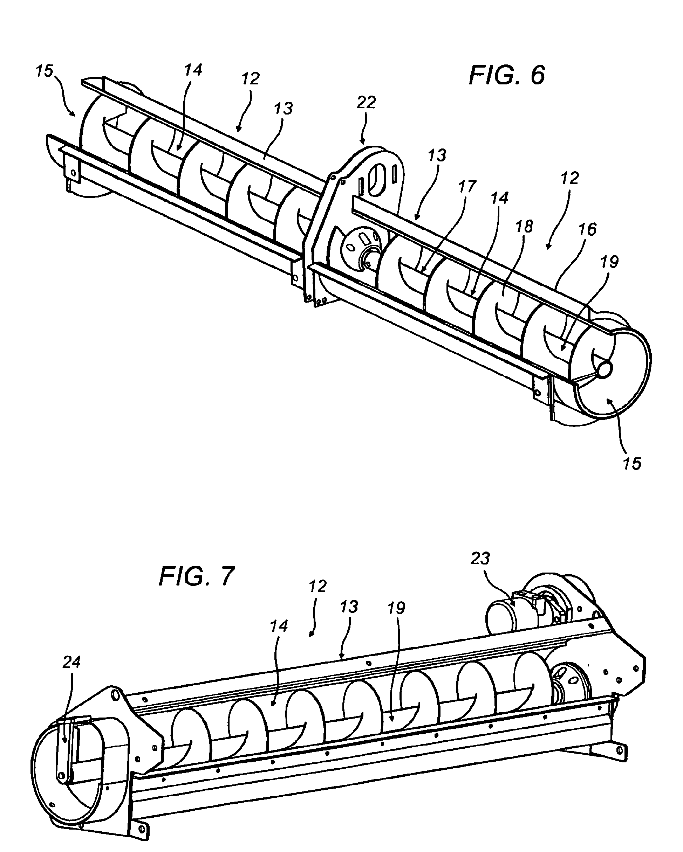

As shown in Figure 6, the conveyor 12 comprises a long tubular element 13 having an inlet section or opening 14 and one or more outlet sections 15.

The inlet section 14 is in the form of an interruption in the casing 16 constituted by the tubular element 13 extending round a circular boundary for approximately 3/4 of the circle.

The inlet section 14 structurally connects or coincides with the outlet section 8 of the collecting means 5.

The conveyor 12 also comprises a power-driven auger or screw feeder 17 housed in the tubular element 13 and provided with a material feed helix 18 wound around, and mounted as one on, a power-driven shaft 19.

The helix 18 of the screw 17 is inclined in such a way that - as the shaft 19 rotates - it transfers towards the outlet section or sections 15 of the tubular element 13 the waste material it has received through the inlet section 14.

Connected to the outlet section or sections 15 of the tubular element 13, the apparatus 11 comprises means 20 for guiding the waste material in such a way as to unload it onto the soil 3 to be mulched in a conveniently confined space to heap the material in a neat and continuous ridge of suitable size.

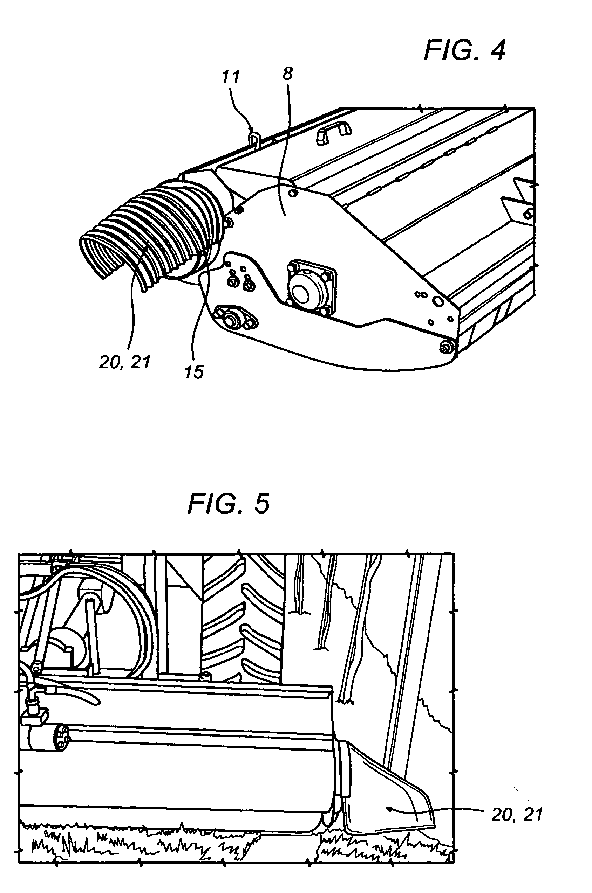

As shown in Figures 3 and 4, the guide means 20 are embodied by nozzles 21 mounted on the outlet section or sections 15 of the tubular element 13 and curved in such a way as to guide and accompany the mulching material as it falls onto the soil 3.

Returning to Figure 6, it may be observed that, in this specific case, the apparatus 11 comprises two coaxial tubular elements 13 housing two screw feeders 17 connected to a shaft 19. The screw feeders 17 have counter-rotating helixes 18 so that the single rotation direction of the shaft 19 causes material to be unloaded from both outlet sections 15, that is to say on both sides of the operating machine 1 as a whole.

It is contemplated the use of a single shaft 19 or, preferably, a pair of coaxial shafts 19, 19 in line with each other, and each of which mounts a respective helix 18, said coaxial shafts 19, 19 being connected to each other and rotating together as one. In both cases, the transversally aligned feed means 13, 13 may be driven by a single drive motor that rotates the respective shaft 19 - central in Figure 6 (driven for example by a hydraulic orbital motor) - or by a transmission system mounted on a suitable structure 22 and transmitting the drive motion for example from an external motor or from the shredder motor.

In this case, it is evident that the apparatus 11 can simultaneously mulch two rows on both sides of an inter-row strip of soil 4 on which the agricultural machine 1 as a whole is travelling and at the same time treating - for example, cutting - the cover crop on the soil 4.

When this is not possible or convenient, the machine 1 might, in an alternative embodiment, comprise a single tubular conveyor 12, as shown in Figure 7.

In both cases, therefore, that is to say, both in the case of a single conveyor and in the case of a first and a second conveyor comprising a first and a second screw feeder each housed in respective first and second tubular elements 13, 13, a single motor 23, mounted at one end of the conveyor 12, can be used to drive the respective shaft 19 in such a way as to unload the mulching material on only one side of the agricultural operating machine 1.

Looking now at the constructional details of the conveyor 12, the tubular element 13 may advantageously be made of plastic: thus, the helixes 18 housed in the tubular element 13 can operate with less friction. The helixes 18 may in turn be mounted on shafts 19 supported at one point only or at two or more points. A first example of this embodiment may be inferred from the constructional solution of Figure 6, where the shaft 19 or the assembly comprising a pair of integral shafts 19, 19, is supported only in the middle and project in cantilever fashion towards both sides of the machine 1.

A second example, shown in Figure 7, on the other hand, contemplates the addition of a bearing 24 associated with the end of the shaft 19 furthest from the motor 23.

As to the size of the helix 18, a good ratio between the diameter of the helix 18 and the diameter of the shredder rotor 6 is one that may vary between approximately 1/2 and 1, providing a good correlation between the flow of the biomass collected from the shredder and the flow of mulch delivered.

Further, the total length of the two coaxial conveyors 12, in the embodiments that have them, is greater than the working or cutting length of the shredder. Laterally of the machine 1 the outlet sections 15 of the conveyors protrude outwards from the shredder to enable the shredded material to fall closer to the crop plant and further from the shredder frame, so as to avoid heaping on the inter-row strip of grass covered soil 4, which might hamper subsequent mowing and might damage the grass cover itself.

When the width of the grass covered strip is greater than the working width of the machine 1, the apparatus 11 according to the invention may be equipped with a conveyor 12 that transfers the material from one side of the machine 1 to the other. In this case, motion is imparted to the helix 18 on one side of the shredder in the same way as described above. The shredder which mounts the apparatus 11 with monolateral conveyor 12 is preferably attached by a hydraulic hitch so that the shredder can be extended outside the width of the tractor 2 to unload the mulch on the required zone.

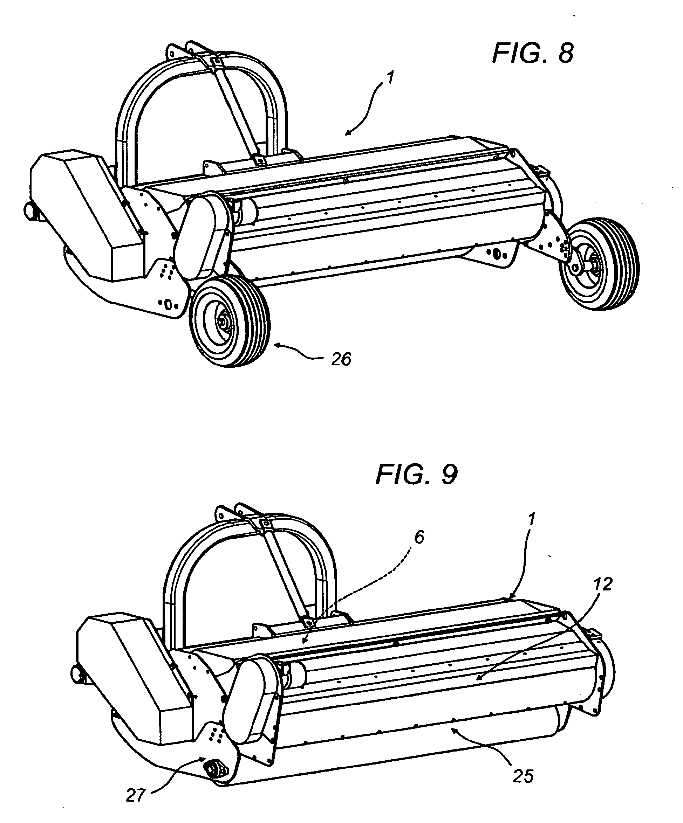

The shredder which mounts the apparatus 11 (whether bilateral or monolateral) may rest on wheels 26 (Figure 8) or on a roller 25 (Figure 9).

The wheels 26 may be of the fixed or swivelling type, supported on the same side as the frame of the apparatus 11 and are adjustably mounted for height. This solution is preferable for defoliating treatments of certain crops, in particular, carrots, planted in ridged rows. In effect, the shredded leaf must be directed to one of the furrows in which the tractor 2 moves and not on the crop itself, so that during subsequent harvesting the leaf does not mix with the defoliated product.

As to the roller 25, this is mounted ahead of the conveyor 12 and, more specifically, between the rotor 6 and the conveyor 12. The cleaning of the roller 25 is guaranteed by the rotor 6 which, in all the positions within its adjustment range, remains approximately 1 cm from the cutting elements. The roller 25 is mounted on adjustable lateral skids 27 whose transversal dimension is such as not to interfere with the mulched zone during mowings after the first mowing.

Means 30 are also provided for controlling the rotation speed of the auger or screw feeder 17, these means being in the form of a proportional valve for regulating the flow of the drive fluid, that is to say, of the oil flowing from the drive motor 23 of the respective screw feeders. Thus, the speed control means 30 enable the transfer means 9 to increase or decrease the feed speed at which the mulch is transferred to the required zone by increasing or decreasing the speed at which the apparatus moves over the ground.

The apparatus 11 according to the invention fully achieves the above mentioned aims by enabling one or more zones to be mulched with the biomass available in the crop area at the same time as normal soil management operations are carried out on the cover crop areas. What is more, this is done without requiring additional operations or incurring further costs.

This has a twofold advantage: first of all, soil management operations can be carried out simultaneously; secondly, mulching crops with organic material derived from the crops themselves dispenses with at least one herbicide treatment a year and/or reduces the need for fertilizer if the organic mulch is turned over into the soil, with obvious savings in management costs.

It is thus provided an apparatus which can, in particular, be associated with an agricultural machine capable of continuously feeding the apparatus with material, especially organic biomass, suitable for mulching.

The invention described above is susceptible of industrial application and may be modified and adapted in several ways without thereby departing from the scope of the inventive concept. Moreover, all details of the invention may be substituted by technically equivalent elements.

## Claims

1. An apparatus for mulching a crop, comprising means (5) for collecting suitable mulching material from the soil (4) contiguous with the crop soil (3), said collecting means comprising a shredder designed to collect an organic product from the soil (4) such as grass, bushes, or shrubs and cut it into small pieces, the apparatus further comprising means (9) for transferring the mulching material and heaping it on the crop soil, **characterized in that** the transfer means (9) comprise at least one conveyor (12) interposed between the collecting means (5) and the crop to be mulched and designed to transfer to the crop the organic product received from the shredder, and **in that** the shredder has a power-driven rotor (6), the rotor (6) bearing respective means for cutting the organic product, and for reducing it in small pieces which are then conveyed towards an outlet section or opening (8) through which they are passed on to the means (9) that transfer the organic material.

2. The apparatus according to claim 1, **characterized in that** the transfer means (9) comprise a first and a second conveyor (12).

3. The apparatus according to any of the foregoing claims, **characterized in that** the conveyor (12) is in the form of an endless conveyor.

4. The apparatus according to any of the foregoing claims, **characterized in that** the conveyor (12) includes a long tubular element (13) having an inlet section (14) and at least one outlet section (15).

5. The apparatus according to any of the foregoing claims, **characterized in that** the conveyor (12) comprises a power-driven screw feeder (17).

6. The apparatus according to claim 5, **characterized in that** the power-driven screw feeder (17) is designed to transfer the waste material received through an inlet section (14) to an outlet section or each of the outlet sections (15) of the tubular element (13).

7. The apparatus according to any of the foregoing claims, **characterized in that** the transfer means (9) comprise a first and a second conveyor (12) in turn comprising respective screw feeders (17) which rotate in opposite directions and which are designed to transfer the products received from at least one inlet section (14) to two separate outlet sections (15).

8. The apparatus according to any of the foregoing claims, **characterized in that** a power-driven screw feeder (17) is housed in a tubular element (13).

9. The apparatus according to any of the foregoing claims, **characterized in that** it comprises means (20, 21) for guiding the waste material and confining it within a limited area on top of the crop soil, the guide means (20) being embodied by nozzles (21) mounted on an outlet section (15) and curved in such a way as to guide and accompany the mulching material as it falls onto the soil (3).

10. The apparatus according to any of the foregoing claims, **characterized in that** it comprises means (30) for controlling the rotation speed of the screw feeder, the speed control means (20) enabling the transfer (9) to increase or decrease the material feed speed by increasing or decreasing the speed at which the apparatus moves over the ground.

11. The apparatus according to claim 10, **characterized in that** the means (20) for controlling the rotation speed of the screw feeder are in the form of a proportional valve for regulating the flow of the drive fluid.

12. The apparatus according to any of the foregoing claims, **characterized in that** an inlet section (14) through which the material is fed into the conveyor is in the form of an interruption in the casing (16) constituted by a tubular element (13).

13. The apparatus according to any of the foregoing claims, **characterized in that** it comprises a support (24) associated with the end of the shaft (19) of the screw feeder (17) furthest from the drive motor (23).

14. The apparatus according to any of the foregoing claims, **characterized in that** laterally of the machine (1) an outlet sections (15) of the conveyors protrude outwards from the shredder frame.

15. The apparatus according to any of the foregoing claims, **characterized in that** it comprises a first and a second tubular element (13, 13) coaxial with each other and each housing a respective screw feeder; and **in that** the total length of the two coaxial conveyors (12, 12) is greater than the working or cutting length of the shredder.

## Patentansprüche

1. Vorrichtung zum Mulchen einer Pflanzenzucht, umfassend Mittel (5) zum Einsammeln von geeignetem Mulchmaterial vom Boden (4) angrenzend zum Pflanzenzuchtboden (3), wobei die Sammelmittel einen Schredder umfassen, der dazu konzipiert ist, ein organisches Produkt vom Boden (4) einzusammeln, wie zum Beispiel Gras, Büsche oder Sträucher, und es in kleine Stücke zu schneiden, wobei die Vorrichtung ferner Mittel (9) zum Übertragen des Mulchmaterials und Schütten auf den Pflanzenzuchtboden umfasst, **dadurch gekennzeichnet, dass** die Übertragungsmittel (9) mindestens einen Förderer (12) umfassen, der zwischen den Sammelmitteln (5) und der zu mulchenden Pflanzenzucht liegt und dazu konzipiert ist, das vom Schredder empfangene organische Produkt zur Pflanzenzucht zu übertragen und dass der Schredder einen kraftbetriebenen Rotor (6) aufweist, wobei der Rotor (6) entsprechende Mittel zum Schneiden des organischen Produkts und zum Zerkleinern dessen in kleine Stücke trägt, die anschließend in Richtung eines Auslassabschnitts bzw. einer Öffnung (8) gefördert werden, durch die sie zu den Mitteln (9) weitergeleitet werden, die das organische Material übertragen.

2. Vorrichtung nach Anspruch 1, **dadurch gekennzeichnet, dass** die Übertragungsmittel (9) einen ersten und einen zweiten Förderer (12) umfassen.

3. Vorrichtung nach einem der vorangehenden Ansprüche, **dadurch gekennzeichnet, dass** der Förderer (12) in der Form eines Endlosförderers vorliegt.

4. Vorrichtung nach einem der vorangehenden Ansprüche, **dadurch gekennzeichnet, dass** der Förderer (12) ein langes, rohrförmiges Element (13) einschließt, aufweisend einen Einlassabschnitt (14) und mindestens einen Auslassabschnitt (15).

5. Vorrichtung nach einem der vorangehenden Ansprüche, **dadurch gekennzeichnet, dass** der Förderer (12) einen kraftbetriebenen Schneckenförderer (17) umfasst.

6. Vorrichtung nach Anspruch 5, **dadurch gekennzeichnet, dass** der kraftbetriebene Schneckenförderer (17) dazu konzipiert ist, das durch einen Einlassabschnitt (14) empfangene Abfallmaterial an einen Auslassabschnitt bzw. jeden der Auslassabschnitte (15) des rohrförmigen Elements (13) zu übertragen.

7. Vorrichtung nach einem der vorangehenden Ansprüche, **dadurch gekennzeichnet, dass** die Übertragungsmittel (9) einen ersten und einen zweiten Förderer (12) umfassen, die wiederum entsprechende Schneckenförderer (17) umfassen, die sich in entgegengesetzten Richtungen drehen und dazu konzipiert sind, die von mindestens einem Einlassabschnitt (14) empfangenen Produkte an zwei getrennte Auslassabschnitte (15) zu übertragen.

8. Vorrichtung nach einem der vorangehenden Ansprüche, **dadurch gekennzeichnet, dass** der kraftbetriebene Schneckenförderer (17) in einem rohrförmigen Element (13) untergebracht ist.

9. Vorrichtung nach einem der vorangehenden Ansprüche, **dadurch gekennzeichnet, dass** sie Mittel (20, 21) zum Führen des Abfallmaterials und Eingrenzen dessen innerhalb eines begrenzten Gebiets auf dem Pflanzenzuchtboden umfasst, wobei die Führungsmittel (20) durch Düsen (21) ausgeführt sind, die an einem Auslassabschnitt (15) befestigt und so gebogen sind, dass sie das Mulchmaterial führen und begleiten, während es auf den Boden (3) fällt.

10. Vorrichtung nach einem der vorangehenden Ansprüche, **dadurch gekennzeichnet, dass** sie Mittel (30) zur Steuerung der Drehgeschwindigkeit des Schneckenförderers umfasst, wobei die Mittel (20) zur Steuerung der Geschwindigkeit ermöglichen, dass die Übertragung (9) die Vorschubgeschwindigkeit des Materials durch Erhöhen oder Verringern der Geschwindigkeit erhöht oder verringert, bei der sich die Vorrichtung über den Boden bewegt.

11. Vorrichtung nach Anspruch 10, **dadurch gekennzeichnet, dass** die Mittel (20) zur Steuerung der Drehgeschwindigkeit des Schneckenförderers in Form eines Proportionalventils zur Regulierung der Strömung des Antriebsfluids vorliegen.

12. Vorrichtung nach einem der vorangehenden Ansprüche, **dadurch gekennzeichnet, dass** ein Einlassabschnitt (14), durch den das Material dem Förderer zugeführt wird, in Form einer Unterbrechung im Gehäuse (16) vorliegt, das aus einem rohrförmigen Element (13) besteht.

13. Vorrichtung nach einem der vorangehenden Ansprüche, **dadurch gekennzeichnet, dass** sie einen Träger (24) umfasst, der mit dem am weitesten vom Antriebsmotor (23) entfernten Ende der Welle (19) des Schneckenförderers (17) verbunden ist.

14. Vorrichtung nach einem der vorangehenden Ansprüche, **dadurch gekennzeichnet, dass** seitlich der Maschine (1) Auslassabschnitte (15) der Förderer vom Schredderrahmen nach außen hervorragen.

15. Vorrichtung nach einem der vorangehenden Ansprüche, **dadurch gekennzeichnet, dass** sie ein erstes und ein zweites rohrförmiges Element (13, 13) umfasst, die koaxial zueinander sind und in denen jeweils ein entsprechender Schneckenförderer untergebracht ist, und dass die Gesamtlänge der zwei koaxialen Förderer (12, 12) größer als die Arbeits - bzw. Schneidlänge des Schredders ist.

## Revendications

1. Appareil de paillage d'une culture, comprenant des moyens (5) permettant de collecter du paillis approprié du sol (4) contigu au terrain de culture (3), lesdits moyens de collecte comprenant un broyeur conçu pour collecter du sol (4) un produit organique tel que de l'herbe, des buissons, ou des arbustes et pour le couper en petits morceaux, l'appareil comprenant de plus des moyens (9) permettant de transférer le paillis et de l'entasser sur le terrain de culture, **caractérisé en ce que** les moyens de transfert (9) comprennent au moins un convoyeur (12) interposé entre les moyens de collecte (5) et la culture à pailler et conçus pour transférer vers la culture le produit organique reçu du broyeur, et **en ce que** le broyeur possède un rotor motorisé (6), le rotor (6) supportant des moyens respectifs pour couper le produit organique, et pour le réduire en petits morceaux qui sont alors convoyés vers une section de sortie ou une ouverture (8) à travers laquelle ils sont passés sur les moyens (9) transférant la matière organique.

2. Appareil selon la revendication 1, **caractérisé en ce que** les moyens de transfert (9) comprennent un premier et un second convoyeur (12).

3. Appareil selon l'une quelconque des revendications précédentes, **caractérisé en ce que** le convoyeur (12) a la forme d'un convoyeur continu.

4. Appareil selon l'une quelconque des revendications précédentes, **caractérisé en ce que** le convoyeur (12) inclut un élément tubulaire long (13) possédant une section d'entrée (14) et au moins une section de sortie (15).

5. Appareil selon l'une quelconque des revendications précédentes, **caractérisé en ce que** le convoyeur (12) comprend un distributeur à vis motorisé (17).

6. Appareil selon la revendication 5, **caractérisé en ce que** le distributeur à vis motorisé (17) est conçu pour transférer les déchets reçus à travers une section d'entrée (14) vers une section de sortie ou vers chacune des sections de sortie (15) de l'élément tubulaire (13).

7. Appareil selon l'une quelconque des revendications précédentes, **caractérisé en ce que** les moyens de transfert (9) comprennent un premier et un second convoyeur (12) à leur tour comprenant des distributeurs à vis respectifs (17) tournant dans des directions opposées et étant conçus pour transférer les produits reçus à partir d'au moins une section d'entrée vers deux sections de sortie séparées (15).

8. Appareil selon l'une quelconque des revendications précédentes, **caractérisé en ce qu'**un distributeur à vis motorisé (17) est logé dans un élément tubulaire (13).

9. Appareil selon l'une quelconque des revendications précédentes, **caractérisé en ce qu'**il comprend des moyens (20, 21) pour guider les déchets et les confiner à l'intérieur d'une zone limitée située au dessus du terrain de culture, les moyens de guidage (20) étant réalisés par des buses (21) montées sur une section de sortie (15) et courbées de sorte à guider et à accompagner le paillis lorsqu'il tombe sur le terrain (3).

10. Appareil selon l'une quelconque des revendications précédentes, **caractérisé en ce qu'**il comprend des moyens (30) permettant de contrôler la vitesse de rotation du distributeur à vis, les moyens de contrôle de vitesse (20) permettant le transfert (9) pour augmenter ou diminuer la vitesse d'alimentation de matière en augmentant ou en diminuant la vitesse à laquelle l'appareil se déplace sur le sol.

11. Appareil selon la revendication 10, **caractérisé en ce que** les moyens (20) permettant le contrôle de la vitesse de rotation du distributeur à vis ont la forme d'une vanne proportionnelle permettant le réglage du flux du fluide d'entraînement.

12. Appareil selon l'une quelconque des revendications précédentes, **caractérisé en ce qu'**une section d'entrée (14), à travers laquelle la matière est amenée au convoyeur, a la forme d'une interruption dans le corps (16) constitué par un élément tubulaire (13).

13. Appareil selon l'une quelconque des revendications précédentes, **caractérisé en ce qu'**il comprend un support (24) associé à l'extrémité de l'arbre (19) du distributeur à vis (17) la plus éloignée du moteur d'entraînement (23).

14. Appareil selon l'une quelconque des revendications précédentes, **caractérisé en ce que** sur les parties latérales de la machine (1) des sections de sortie (15) des convoyeurs dépassent hors du châssis du broyeur.

15. Appareil selon l'une quelconque des revendications précédentes, **caractérisé en ce qu'**il comprend un premier et un second élément tubulaire (13, 13) coaxiaux entre eux et logeant chacun un distributeur à vis respectif; et **en ce que** la longueur totale des deux convoyeurs coaxiaux (12, 12) est supérieure à la longueur de travail ou de coupe du broyeur.
